# EUROPEAN PATENT SPECIFICATION

(11) **EP 3 892 884 B1**
(45) Date of publication and mention of the grant of the patent: **17.05.2023**
(21) Application number: 21167232.4
(22) Date of filing: 07.04.2021
(51) Int. Cl.: F16D 65/18

(54) **ELECTROMAGNETIC BRAKE**
ELEKTROMAGNETISCHE BREMSE
FREIN ÉLECTROMAGNÉTIQUE

(30) Priority: 09.04.2020 IT 202000007642
(43) Date of publication of application: 13.10.2021
(73) Proprietor: Temporiti S.r.l., 20010 Mesero MI (IT)
(72) Inventor: OLIVARI, Germano, 20010 Casorezzo MI (IT); SEMINARA, Federico, 20011 Corbetta MI (IT)
(74) Representative: Concone, Emanuele

(56) References cited:
- DE-A1- 19 630 779
- DE-B3-102006 009 876
- US-A1- 2002 100 646

## Description

### TECHNICAL FIELD

The present invention relates to an electromagnetic brake for electric motors of any category (single-phase or three-phase self-braking, etc.), or for other similar applications other than an electric motor.

### BACKGROUND OF THE INVENTION

An electromagnetic brake is a braking device which is usually coupled to an electric motor and intervenes in case of lack of current with a given braking torque, causing the motor and whatever it drives to stop. Such a brake comprises a container housing a disc having opposite surfaces covered with a material having a predetermined coefficient of friction, which may be splined to the motor shaft either directly or indirectly via a hub.

The brake housing also accommodates an axially movable armature plate element which is pushed against the disc by compression springs arranged between the armature plate and an electromagnet, so that the disc is clamped with a given braking torque between the axially movable armature plate and a motor shield or other braking surface. The value of the braking torque depends on the force exerted by the compression springs and the coefficient of friction of the material covering the disc surfaces, and is one of the nameplate values of the electromagnetic brake.

To release the electromagnetic brake, the electromagnet, fixed in the housing on the cover opposite to the one adjacent to the disc, is energised when the electric motor starts up and draws the armature plate toward itself, overcoming the resistance of the springs, to allow the disc to rotate and consequently the motor shaft and the load applied to it. When the power supply is interrupted, the electromagnet releases the armature plate, which is pushed again by the compression springs and locks the disc.

The disc, the armature plate and the electromagnet form the braking assembly of the above-described brakes. Furthermore, some brakes of this type comprise two discs and two armature plates: the electromagnet is placed in the centre and sandwiched between the armature plates and the discs, in that order.

One problem with this type of brake, whether with a single or double armature plate braking assembly, is that it requires a great deal of expensive periodic maintenance, since the high-friction material is gradually worn away by friction during use, until the disc needs to be replaced. To prevent unexpected material consumption from causing accidents, some brakes include a safety system that prevents the brake from being released when the material is excessively eroded.

For this purpose, a microswitch is typically used that can only be activated when the material is worn beyond a certain extent. However, this type of sensor only provides an ON/OFF signal and does not reduce the costs associated with scheduled preventive maintenance or extraordinary interventions caused by an unexpected premature blockage.

Another type of sensor can be a resistive, capacitive or inductive sensor to continuously detect the position of an armature plate, as described in DE 19630779A1 but in relation to a double solenoid actuator which has a pair of moving armature plates arranged in line within a common housing. Each solenoid has a coil which when energized causes the armature plates to move away from each other and rods mounted externally on said armature plates to release a brake mechanism. Such a device, however, does not comprise the characteristic elements of an electromagnetic brake and operates in a substantially different manner, since it has no disc having opposing surfaces covered with friction material which is keyed to a motor shaft, nor compression springs to push the armature plates against the disc.

### SUMMARY OF THE INVENTION

It is therefore an object of the present invention to provide an electromagnetic brake which overcomes the above drawbacks. This object is achieved with an electromagnetic brake comprising a sensor assembly suitable for measuring the movement of the armature plate due to the attraction of the electromagnet and thus the level of consumption of the friction material of the disc.

The main advantage of the brake according to the present invention is, therefore, to be able to know the exact level of consumption of the high friction material and then to be able to schedule maintenance work according to this level of consumption, thus postponing work which is not yet necessary (e.g. due to reduced use of the brake) or, vice versa, anticipating a work planned later, so as to avoid a blockage of the brake due to excessive consumption.

### BRIEF DESCRIPTION OF THE DRAWINGS

Further advantages and features of the electromagnetic brake according to the present invention will be apparent to those skilled in the art from the following detailed and non-limiting description of some of its embodiments with reference to the appended drawings in which:
- Figure 1 shows an isometric view of a sectioned braking assembly of a single armature plate electromagnetic brake according to a first embodiment;
- figure 2 shows an axial section of the braking assembly of figure 1;
- figure 3 shows detail III of figure 2;
- Figure 4 shows an isometric view of a sectioned braking assembly of a double armature plate electromagnetic brake in a variant of the first embodiment;
- figure 5 shows an axial section of the braking assembly of figure 4;
- figure 6 shows detail VI of figure 5;
- Figure 7 shows an isometric view of a sectioned braking assembly of a single armature plate electromagnetic brake according to a second embodiment;
- figure 8 shows an axial section of the braking assembly of figure 7;
- figure 9 shows detail IX of figure 8;
- Figure 10 shows an isometric view of a sectioned braking assembly of a double armature plate electromagnetic brake according to a variant of the second embodiment;
- figure 11 shows an axial section of the braking assembly of figure 10;
- figure 12 shows detail XII of figure 11;
- Figure 13 shows an isometric view of a braking assembly of a single armature plate electromagnetic brake according to a third embodiment; and
- figure 14 shows an isometric view of a braking assembly of a double armature plate electromagnetic brake according to a variant of the third embodiment.

### EXEMPLARY EMBODIMENTS

Referring to the above figures, a braking assembly 1 according to the present invention can be seen.

The brake according to the present invention comprises at least one disc 6 configured to be fitted to a drive shaft defining a shaft axis X, preferably by means of a hub 5 but it is understood that the disc 6 may also be fitted directly to the drive shaft or to any rotating part depending on the specific application.

The disc 6 has a development according to a plane perpendicular to the shaft axis X and comprises two main opposite surfaces coated with a material 7 having a predetermined friction coefficient. This coating is characterised by a certain thickness, the extent of which varies according to the composition and the type of application for which the brake is used, which gradually decreases during use.

The brake according to the present invention further comprises an electromagnet 8, for example of annular shape and coaxial with hub 5, and at least one movable armature plate element 9 arranged between disc 6 and electromagnet 8. It is to be understood that electromagnet 8 may have other shapes depending on the specific type of brake. The armature plate 9 is configured to be pushed against disc 6, when the power is off, by a plurality of compression springs (not shown) in a direction defined by the shaft axis X, and to be attracted to, and maintained in contact with, electromagnet 8 when the rotating organ on which the 6 is fitted is in operation.

An innovative aspect of the brake according to the present invention is that it further comprises a sensor assembly 2 configured to measure the movement of the armature plate 9 due to the attraction of electromagnet 8, as well as communication means, such as a wiring harness or a wireless transmission system, which transmit the measurements performed by the sensor assembly 2 to the outside of the brake. Thanks to this measurement, it is possible to evaluate the reduction in the thickness of material 7 based on the value of the air gap, i.e. the distance between the armature plate 9 and electromagnet 8 according to a direction parallel to the shaft axis X.

According to a first aspect of the invention, the sensor assembly 2 comprises at least one strain gauge 2a configured to undergo a deformation variation as a result of the movement of the armature plate 9. The deformation variation of the strain gauge 2a is then used to obtain a measurement of the distance that the armature plate 9 travels to cross the air gap when it is attracted by electromagnet 8. In the text of the description below, reference will be made to a single strain gauge, but it is always to be understood that it may refer to several strain gauges arranged together, as in the case of a "pair" or a "rosette" of strain gauges.

According to a further aspect, the sensor assembly 2 is housed in a housing 8a inside electromagnet 8 extending in a direction parallel to the shaft axis X, starting from the surface of electromagnet 8 facing the armature plate 9, and preferably in a position radially external to the coil 8b of electromagnet 8. Said housing 8a is in communication with a threaded hole 8c of smaller diameter extending to the opposite surface of electromagnet 8, so as to accommodate a threaded adjuster 4 which is adjusted, preferably by means of a nut 4a. The function of adjuster 4 is to compensate for the inevitable manufacturing tolerances of the system so that sensor 2 does not detect any wear when disc 6 is new, i.e. that the reading of thickness 7 is correct when the brake is applied for the first time.

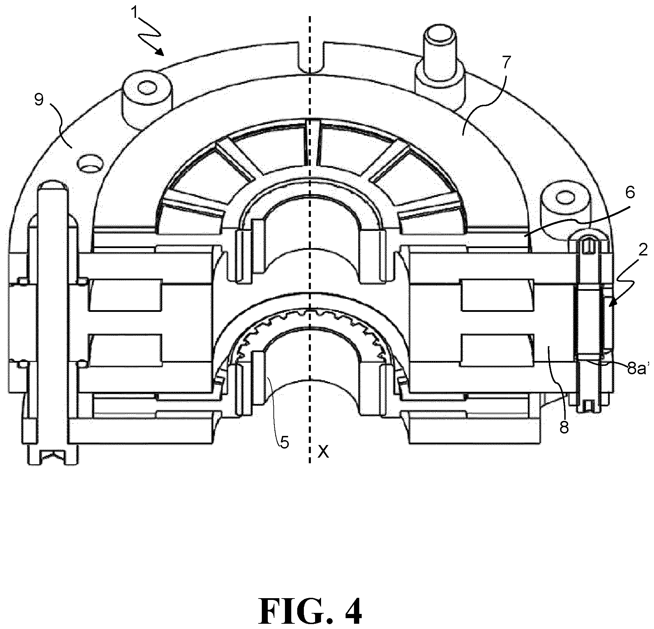

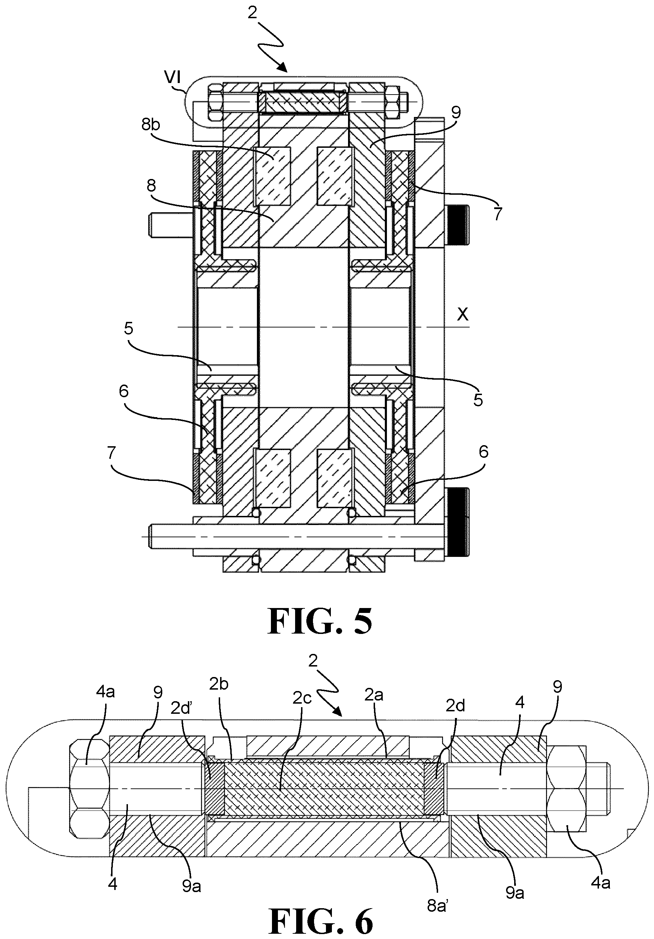

According to still another aspect, the brake according to the present invention comprises a single hub 5, a single disc 6 and a single armature plate 9, and housing 8a is, in this case, the one described above. Or, alternatively, the braking assembly 1 comprises two coaxial hubs 5, which support respective discs 6, and two armature plates 9 each of which is disposed between a respective disc 6 and electromagnet 8. In other words, electromagnet 8 is placed in the centre and sandwiched by the armature plates 9 and discs 6, in that order and in a direction parallel to the shaft axis X (Figs.4-6).

The electromagnet 8 preferably comprises two excitation coils 8b, each in correspondence with a respective armature plate 9 so that they can be attracted independently of each other. The housing 8a' housing sensor 2 is, in this case, a through hole extending between the two surfaces of the electromagnet 8 facing the two armature plates 9, and the two adjusters 4 are mounted on the latter in corresponding threaded holes 9a.

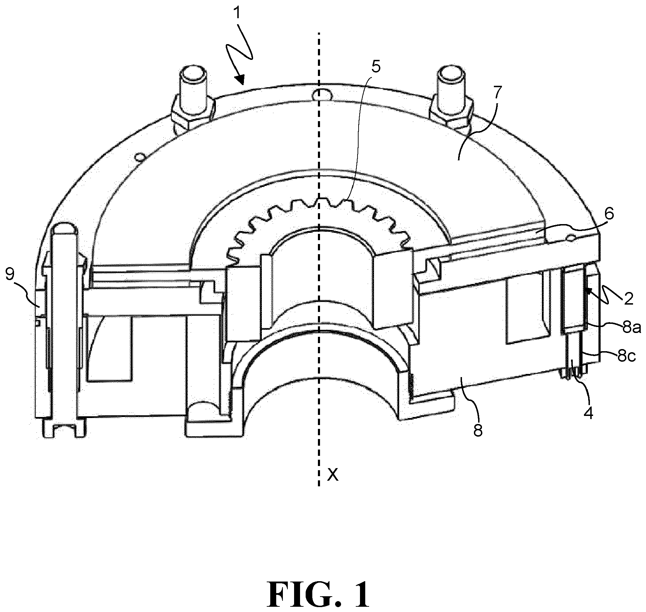

Referring to figures 1-6, the sensor assembly 2 of the electromagnetic brake according to a first embodiment comprises a hollow cylinder 2b whose axis is parallel to the shaft axis X, said strain gauge 2a being rigidly connected to an outer lateral surface of said cylinder 2b. More particularly, the hollow cylinder 2b is made of a material characterised by a certain degree of elasticity, such as for example a metallic material, and the strain gauge 2a is applied by means of gluing to the external lateral surface of the hollow cylinder 2b, which is configured to be inserted into housing 8a, 8a' with a play suitable to allow its deformation. This play is maintained uniform over the entire circumference of the hollow cylinder 2b, preferably by means of its flanged ends which keep it coaxial to housing 8a, 8a' in which it is inserted.

The sensor assembly 2 also comprises a solid cylinder 2c, made of an elastically deformable material such as, for example, silicone, configured to be inserted substantially without play inside the hollow cylinder 2b with respect to which it is slightly shorter. Two plugs 2d, 2d' are inserted at the bases of the solid cylinder 2c, i.e. one at each end, and are configured to penetrate inside the hollow cylinder 2b and axially compress the solid cylinder 2c.

The hollow cylinder 2b is advantageously configured to deform elastically, thereby deforming the strain gauge 2a, due to the deformation of the solid cylinder 2c compressed axially by plugs 2d, 2d'. Referring more particularly to Figures 1-3, in the case of a braking assembly with a single armature plate, plugs 2d, 2d' are arranged as follows: the first plug 2d is in contact with the surface of the armature plate 9 facing electromagnet 8, while the second plug 2d' is in contact with adjuster 4 inside electromagnet 8.

When electromagnet 8 is not activated, and the armature plate 9 is pushed towards disc 6 by the compression springs, the hollow cylinder 2b is configured to undergo a first deformation. In other words, the solid cylinder 2c is subjected to a certain degree of pre-compression so that even when the thickness of material 7 decreases, during the use of the brake, the first plug 2d is always in contact with the surface of the armature plate 9 facing electromagnet 8. On the other hand, when electromagnet 8 is activated, and the armature plate 9 is attracted towards it, the hollow cylinder 2b is configured to undergo a second deformation, which is greater than the first deformation.

The change in deformation between the second deformation and the first deformation returns the measurement of the movement that the armature plate 9 makes. The function of adjuster 4, as mentioned above, is to compensate for the inevitable production tolerances of the system so that the degree of pre-compression to which the solid cylinder 2c is subjected is adequate for the consumption of the entire thickness of material 7.

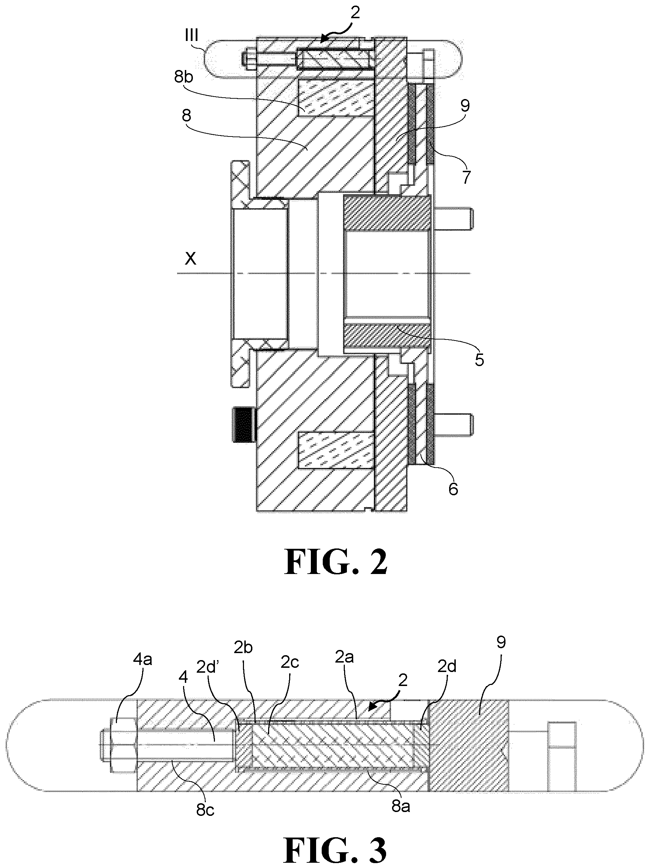

Referring to figures 3-6, in the case of a double armature plate braking assembly, plugs 2d, 2d' are configured as follows: the first plug 2d is in contact with adjuster 4 mounted on the first armature plate 9, and similarly the second plug 2d' is in contact with adjuster 4 mounted on the second armature plate 9. In this way, the sensor assembly 2 can advantageously obtain an independent measurement of the movement of each of the two armature plates 9 when the first armature plate and/or the second armature plate are attracted by the electromagnet 8. Similarly to the single armature plate brake 9, when electromagnet 8 is not activated, the solid cylinder 2c is configured to be subjected to a certain degree of pre-compression and the change in deformation of the hollow cylinder 2b between the second deformation and the first deformation returns a measurement of the movement that each armature plate 9 makes.

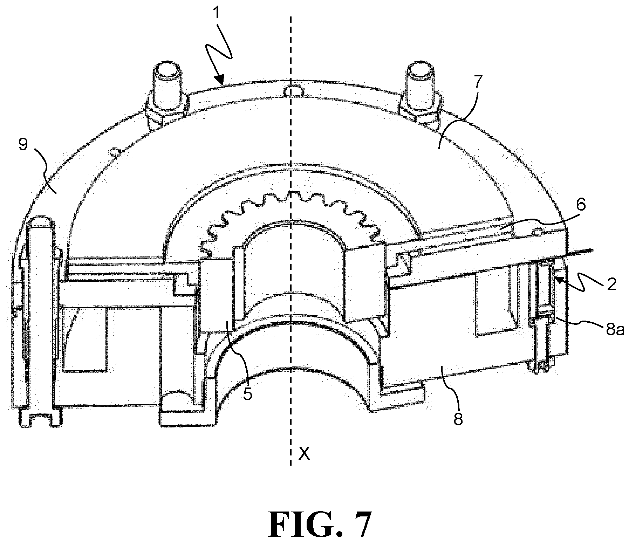

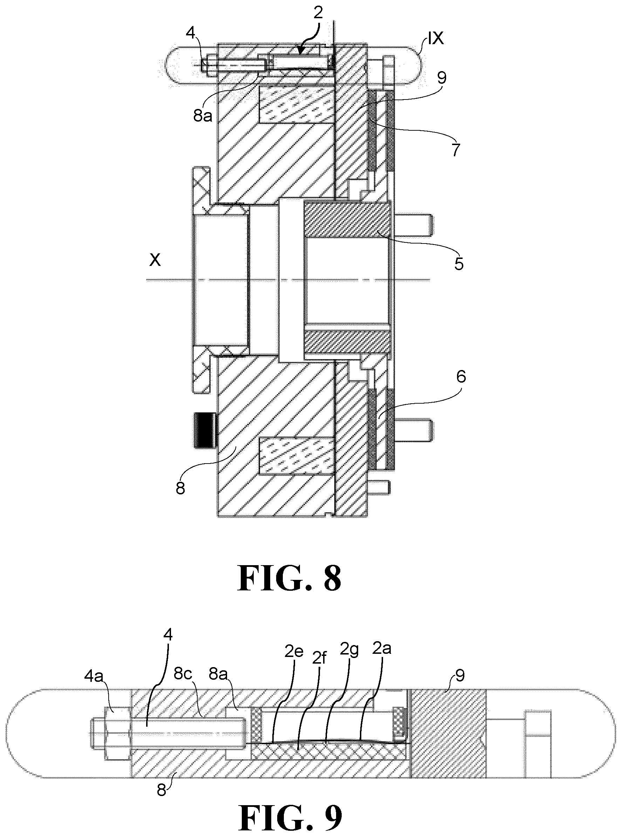

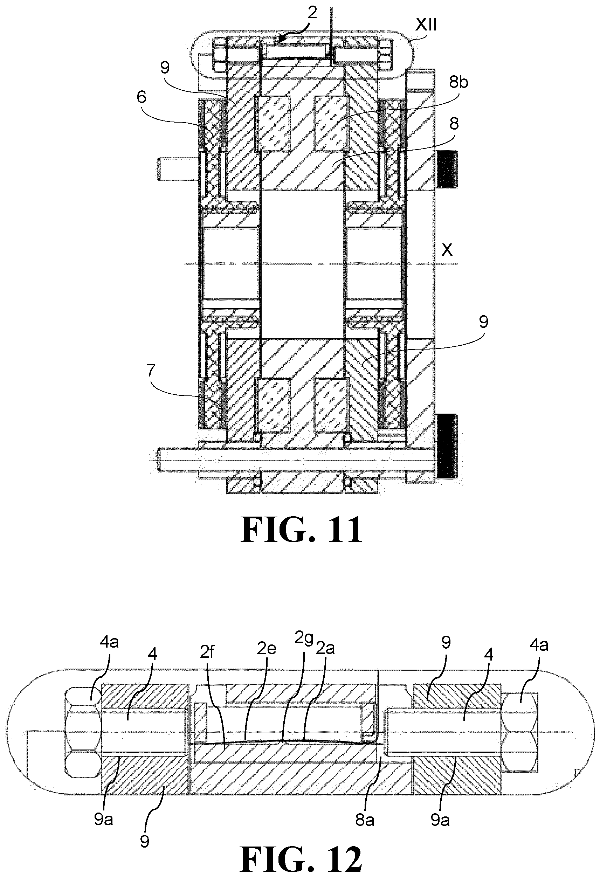

Referring to figures 7-12, the sensor assembly 2 of the electromagnetic brake according to a second embodiment comprises, in addition to the strain gauge 2a, an elastically deformable strip 2e, preferably made of a metal material, to a surface of which the strain gauge 2a is connected, preferably by gluing. Furthermore, strip 2e is configured to be elastically deformed as a result of the movement of the armature plate 9, thereby deforming the strain gauge 2a.

The sensor assembly 2 comprises a support structure 2f configured to be inserted into housing 8a, 8a' and provided with an internal guide having a longitudinal development according to a direction parallel to that of the shaft axis X. The guide is configured to accommodate strip 2e in such a way that both its ends protrude outwardly of said support structure 2f and that said strip 2e can flex within the guide. A central protrusion 2g of the support structure 2f is configured to keep the strip 2e flexed so that it forms an arc, preferably with convexity facing the shaft axis X.

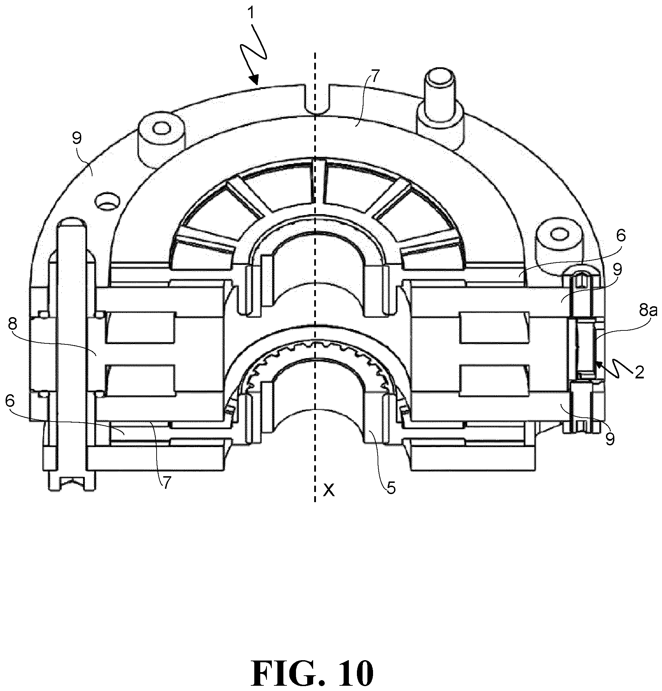

Referring to Figures 7-9 relating to a single armature plate braking assembly, similarly to the first embodiment, the first end of strip 2e is in contact with the armature plate 9, while the second end is configured to be in contact with adjuster 4 within electromagnet 8. Similarly, referring to figures 10-12 relating to a double armature plate braking assembly, the first and second ends of strip 2e are configured as follows: the first end of strip 2e is in contact with adjuster 4 mounted on the first armature plate 9, and similarly the second end is in contact with adjuster 4 mounted on the second armature plate 9. In this way, the sensor assembly 2 can advantageously obtain an independent measurement of the movement of each of the two armature plates 9 when the first armature plate and/or the second armature plate are attracted by electromagnet 8.

Note that, thanks to protrusion 2g, the bending of strip 2e occurs starting from an already arched position, so that the strain gauge 2a always records the same type of movement, extension or compression, depending on the convex or concave surface of strip 2e to which it is applied. Furthermore, when electromagnet 8 is not activated, strip 2e is configured to have a certain degree of initial bending so that even when the thickness of material 7 decreases, during the use of the brake, the first end of strip 2e is always in contact with the surface of the armature plate 9 facing electromagnet 8 (or both the first end and the second end of strip 2e, in the case of a double armature plate brake).

On the other hand, when electromagnet 8 is activated, and the armature plate 9 is attracted towards it, strip 2e is configured to undergo a second deformation, which is greater than the first deformation. The variation of deformation between the second deformation and the first deformation returns the measure of the distance that the armature plate 9 travels to cross the air gap.

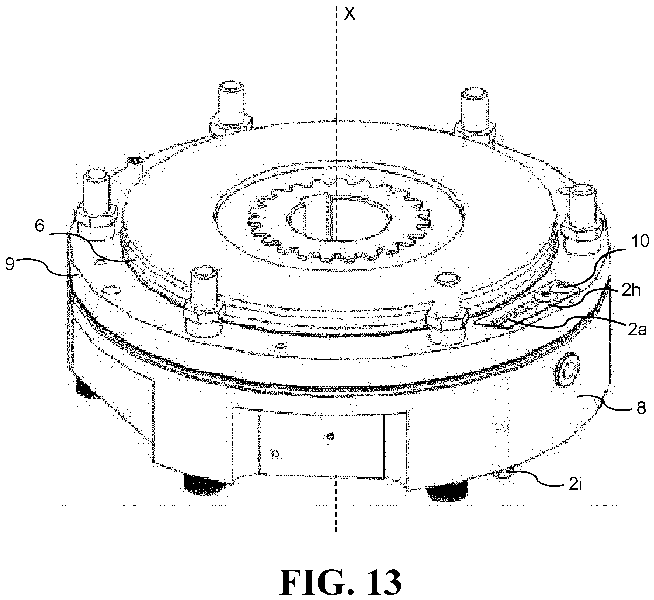

Referring to figure 13, an electromagnetic brake with a single armature plate, according to a third embodiment, provides for a sensor group 2 in which the strain gauge 2a is connected to a plate 2h, elastically deformable and preferably made of metallic material, arranged in a plane substantially perpendicular to the shaft axis X. The plate 2h is constrained to the surface of the armature plate 9 facing disc 6 so as to be free to flex, thereby deforming the strain gauge 2a accordingly. For example, plate 2h is fixed on the free perimeter portion of the armature plate 9 by means of fastenings 10 arranged at an end opposite to the portion where the strain gauge 2a is connected.

A peg 2i is bound to electromagnet 8 and has a longitudinal development towards the armature plate 9 according to a direction parallel to that of the shaft axis X. The peg 2i is advantageously configured to flex plate 2h according to a first deformation, when electromagnet 8 is not activated, and to flex plate 2h according to a second deformation, due to the movement of the armature plate 9, by sliding along a through hole obtained in the armature plate 9 in correspondence with the free portion of plate 2h where the strain gauge 2a is connected.

Similarly to the first and second embodiments, the deformation variation between the second deformation and the first deformation returns the measurement of the movement that the armature plate 9 makes, but in this case the strain gauge 2a must be arranged on the surface of plate 2h facing the disc 6, so as to avoid contact with peg 2i, whereby it is used to detect a compression. Furthermore, the position of peg 2i is adjustable so that the sensor assembly 2 can be adjusted to compensate for manufacturing tolerances and the thickness of material 7 in order to obtain a correct reading of the initial thickness when the brake is first applied.

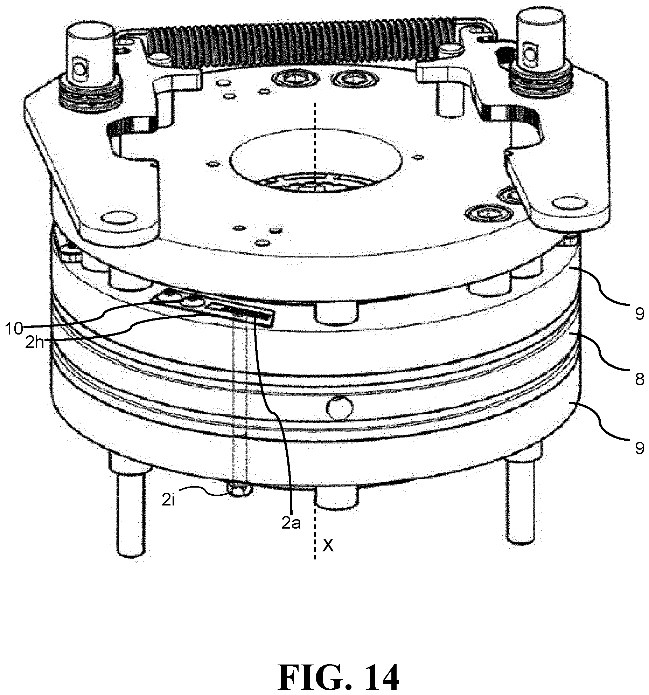

Finally, with reference to figure 14, in a variant of the third embodiment relating to a double armature plate brake, the sensor group 2 has substantially the same structure and arrangement as in Fig. 13, but in this case peg 2i is bound to the second armature 9 and passes through two aligned through holes obtained in electromagnet 8 and in the first armature 9 in correspondence with the free portion of plate 2h where the strain gauge 2a is connected.

Thanks to the sensor group 2 according to the present invention, it is possible to obtain an electromagnetic brake which allows to know the exact value of the consumption of the material with high friction coefficient in order to be able to program the maintenance interventions of the brake. Furthermore, the brake thus obtained is economical and simple to implement, while guaranteeing a measurement of the movement of the armature plate (or both armature plates) which is precise and robust to disturbances.

Possible variants or additions may be made by those skilled in the art to the embodiments described and illustrated herein while remaining within the scope of the following claims. In particular, although in the above description a strain gauge has always been indicated as the sensor means for detecting the deformation of the elastically deformable element (cylinder 2b, strip 2e, plate 2h), it could be replaced by another technically equivalent sensor means having the necessary sensitivity, such as a magnetic (Reed, Hall), optoelectronic, resistive, piezoelectric, etc. sensor.

Further embodiments may also comprise the technical features of any of the following claims with the addition of one or more of the technical features described in the text or illustrated in the drawings, taken singly or in any combination thereof.

## Claims

1. Electromagnetic brake including:
- at least one disc (6) configured to be fitted, directly or by means of a hub (5), to a rotating element defining a shaft axis (X), said at least one disc (6) having opposite surfaces coated with a friction material (7),
- an electromagnet (8),
- at least one armature plate (9) placed between the disc (6) and said electromagnet (8) and movable in a direction defined by said shaft axis (X),
- a plurality of compression springs arranged and configured to push said at least one armature plate (9) against the disc (6), according to said direction,
- the armature plate (9) being configured to be attracted to the electromagnet (8), and kept in contact with it when the electromagnet (8) is operating,
wherein it further includes a sensor assembly (2) capable of measuring the movement along the shaft axis (X) direction, due to the attraction of the electromagnet (8), of said armature plate (9), said sensor assembly (2) **characterized in that** it comprises
- an elastically deformable element (2b; 2e; 2h), placed on the brake so as to have an initial deformation when the electromagnet (8) is not activated and to undergo a change of deformation as a result of said attraction movement of the armature plate (9), and
- sensor means configured to detect said change of deformation of said elastically deformable element (2b; 2e; 2h), as well as
- means of communication transmitting outside the brake the measurements made by the sensor assembly (2).

2. Electromagnetic brake according to claim 1, **characterized in that** said sensor assembly (2) is housed in a housing (8a; 8a') extending inside the electromagnet (8) in a direction parallel to said shaft axis (X), starting from at least one first surface of the electromagnet (8) facing the armature plate (9).

3. Electromagnetic brake according to claim 2, **characterized in that** said housing (8a; 8a') is located radially outside with respect to a coil (8b) of the electromagnet (8).

4. Electromagnetic brake according to claim 2 or 3, **characterized in that** it includes only one disc (6) and one armature plate (9), and **in that** said housing (8a) is in communication with a threaded hole (8c) of smaller diameter extending to the opposite surface of the electromagnet (8) with respect to the surface from which the housing (8a) extends, a threaded adjuster (4) being housed in said threaded hole (8c) and extending to the housing (8a).

5. Electromagnetic brake according to claim 2 or 3, **characterized in that** it includes two discs (6) and two armature plates (9), each of them being placed between a respective disc (6) and the electromagnet (8), said housing (8a') being a through hole extending between the two surfaces of the electromagnet (8) facing the two armature plates (9), each of which is provided with a threaded hole (9a) smaller in diameter than said housing (8a') and coaxial thereto, a threaded adjuster (4) being housed in each of said threaded holes (9a) and extending to the housing (8a').

6. Electromagnetic brake according to any of the preceding claims, **characterized in that** the sensor means comprise at least one strain gauge (2a) rigidly connected to the elastic deformable element (2b; 2e; 2h).

7. Electromagnetic brake according to claim 6 when dependent on one of claims 2-5, **characterized in that** the sensor assembly (2) includes:
- an elastically deformable hollow cylinder (2b) configured to be inserted into the housing (8a; 8a'), the strain gauge (2a) being connected to an outer lateral surface of said hollow cylinder (2b);
- an elastically deformable solid cylinder (2c) configured to be inserted substantially without play inside said hollow cylinder (2b) with respect to which it is slightly shorter;
- two plugs (2d, 2d') inserted in correspondence of the bases of said solid cylinder (2c) and configured to penetrate inside the hollow cylinder (2b), and axially compress the solid cylinder (2c),
in which the hollow cylinder (2b) is inserted into the housing (8a, 8a') with adequate play to allow it to deform, said play being kept uniform over the entire circumference of the hollow cylinder (2b) preferably thanks to its flanged ends which keep it coaxial to the housing (8a, 8a').

8. Electromagnetic brake according to claim 6 when dependent on one of claims 2-5, **characterized in that** the sensor assembly (2) includes:
- an elastically deformable strip (2e), to one surface of which the strain gauge (2a) is connected;
- a support structure (2f) configured to be inserted into the housing (8a, 8a') and comprising an internal guide having a longitudinal development and configured to accommodate said strip (2e) so that both ends thereof protrude outwards from said support structure (2f) and so that the strip (2e) can flex within said guide;
- a central projection (2g) of the support structure (2f) configured to keep the strip (2e) flexed so that it forms an arc, preferably with convexity towards the shaft axis (X).

9. Electromagnetic brake according to claim 6 when dependent on any of claims 1-4, **characterized in that** it includes only one disc (6) and one armature plate (9), and **in that** the sensor assembly (2) includes:
- an elastically deformable plate (2h) to a surface of which the strain gauge (2a) is connected, said plate (2h) having a main development along a plane substantially perpendicular to the shaft axis (X) and being bound to the surface of the armature plate (9) facing the disc (6) so as to be free to flex;
- a peg (2i) constrained to the electromagnet (8) in an adjustable manner and having a longitudinal development towards the armature plate (9) in a direction parallel to that of the shaft axis (X), said peg (2i) passing a through hole formed in the armature plate (9) at the free portion of the plate (2h) where the strain gauge (2a) is connected, and being configured to flex the plate (2h) according to a first deformation, when the electromagnet (8) is not activated, and to flex the plate (2h) according to a second deformation, greater than the first, due to the attraction movement of the armature plate (9).

10. Electromagnetic brake according to claim 6 when depending on any of claims 1-3 or 5, **characterized in that** it includes two discs (6) and two armature plates (9), each of them being placed between a respective disc (6) and the electromagnet (8), and **in that** the sensor assembly (2) includes:
- an elastically deformable plate (2h) to a surface of which the strain gauge (2a) is connected, said plate (2h) having a main development along a plane substantially perpendicular to the shaft axis (X) and being bound to the surface of a first armature plate (9) facing its respective disk (6) so as to be free to flex;
- a peg (2i) constrained to the second armature plate (9) in an adjustable manner and having a longitudinal development towards said first armature plate (9) in a direction parallel to that of the shaft axis (X), said peg (2i) passing through aligned through holes formed in the electromagnet (8) and in the first armature plate (9) at the free portion of the plate (2h) where the strain gauge (2a) is connected, and being configured to flex the plate (2h) according to a first deformation, when the electromagnet (8) is not activated, and to flex the plate (2h) according to a second deformation, greater than the first, due to the attraction movement of the first and/or the second armature plate (9).

11. Electromagnetic brake according to claim 9 or 10, **characterized in that** the plate (2h) is fixed on a free peripheral portion of the armature plate (9) by means of fastenings (10) placed at one end of the plate (2h) opposite the portion where the strain gauge (2a) is connected.

## Patentansprüche

1. Elektromagnetische Bremse, umfassend:
- wenigstens eine Scheibe (6), die dazu ausgelegt ist, direkt oder mittels einer Nabe (5) an einem rotierenden Element, das eine Wellenachse (X) definiert, montiert zu werden, wobei die besagte wenigstens eine Scheibe (6) einander gegenüber liegende Oberflächen aufweist, die mit einem Reibmaterial (7) beschichtet sind,
- einen Elektromagnet (8),
- wenigstens eine Ankerplatte (9), die zwischen der Scheibe (6) und dem besagten Elektromagnet (8) angeordnet ist, und in einer Richtung, welche durch die besagte Wellenachse (X) vorgegeben ist, beweglich ist,
- eine Mehrzahl von Druckfedern, welche derart angeordnet und ausgelegt sind, die besagte, wenigstens eine Ankerplatte (9) gegen die Scheibe (6) zu drücken, entsprechend der besagten Richtung,
- wobei die Ankerplatte (9) dazu ausgelegt ist, von dem Elektromagnet (8) angezogen zu werden und mit ihm in Kontakt zu bleiben, solange der Elektromagnet (8) in Betrieb ist,
wobei sie ferner eine Sensorbaugruppe (2) aufweist, die in der Lage ist, die Bewegung entlang der Richtung der Wellenachse (X) zu messen, aufgrund der Anziehung der besagten Ankerplatte (9) durch den Elektromagnet (8), wobei die besagte Sensorbaugruppe (2) **dadurch gekennzeichnet ist, dass** sie umfasst:
- ein elastisch verformbares Element (2b; 2e; 2h), welches an der Bremse angeordnet ist, so dass es eine Anfangsverformung aufweist, wenn der Elektromagnet (8) nicht aktiviert ist, und einen Wechsel der Verformung erfährt als Ergebnis der besagten Anziehungskraft-Bewegung der besagten Ankerplatte (9), und
- ein Sensormittel, welches dazu ausgelegt ist, die besagte Änderung der Verformung des besagten elastisch verformbaren Elementes (2b; 2e; 2h) zu erkennen, sowie
- ein Kommunikationsmittel, welches die von der Sensorbaugruppe (2) durchgeführten Messungen aus der Bremse nach außen zu überträgt.

2. Elektromagnetische Bremse gemäß Anspruch 1, **dadurch gekennzeichnet, dass** die besagte Sensorbaugruppe (2) in einem Gehäuse (8a; 8a') aufgenommen ist, das sich innerhalb des Elektromagnets (8) in einer Richtung parallel zu der Wellenachse (X) erstreckt, beginnend an wenigstens einer ersten Oberfläche des Elektromagneten (8), die der Ankerplatte (9) zugewandt ist.

3. Elektromagnetische Bremse gemäß Anspruch 2, **dadurch gekennzeichnet, dass** das besagte Gehäuse (8a; 8a') radial außerhalb in Bezug auf eine Spule (8b) des Elektromagneten (8) angeordnet ist.

4. Elektromagnetische Bremse gemäß Anspruch 2 oder 3, **dadurch gekennzeichnet, dass** sie nur eine Scheibe (6) und eine Ankerplatte (9) aufweist, sowie dadurch, dass das besagte Gehäuse (8a) in Verbindung zu einer Gewindebohrung (8c) von kleinerem Durchmessers steht, die sich zu der gegenüber liegenden Fläche des Elektromagneten (8) erstreckt, in Bezug auf diejenige Oberfläche, von welcher das Gehäuse (8a) sich erstreckt, wobei ein mit einem Gewinde versehenes Einstellelement (4) in der besagten Gewindebohrung (8c) aufgenommen ist und sich bis zu dem Gehäuse (8a) erstreckt.

5. Elektromagnetische Bremse gemäß Anspruch 2 oder 3, **dadurch gekennzeichnet, dass** sie zwei Scheiben (6) und zwei Ankerplatten (9) umfasst, wobei jede davon zwischen einer zugeordneten Scheibe (6) und dem Elektromagnet (8) angeordnet ist, wobei das besagte Gehäuse (8a') ein Durchgangsloch ist, das sich zwischen zwei Oberflächen des Elektromagneten (8) erstreckt, welche den zwei Ankerplatten (9) zugewandt sind, wobei jede davon mit einer Gewindebohrung (9a) versehen ist, das im Durchmesser kleiner ist als das besagte Gehäuse (8a') und koaxial dazu, und wobei ein mit einem Gewinde versehenes Einstellelement (4) in jeder der besagten Gewindebohrungen (9a) aufgenommen ist und sich bis zu dem Gehäuse (8a') erstreckt.

6. Elektromagnetische Bremse gemäß einem der vorhergehenden Ansprüche, **dadurch gekennzeichnet, dass** das Sensormittel wenigstens einen Dehnungsmessstreifen (2a) aufweist, der mit dem elastisch verformbaren Element (2b; 2e; 2h) fest verbunden ist.

7. Elektromagnetische Bremse gemäß Anspruch 6, wenn jener von einem der Ansprüche 2 - 5 abhängig ist, **dadurch gekennzeichnet, dass** die Sensorbaugruppe (2) umfasst:
- einen elastisch verformbaren Hohlzylinder (2b), welcher dazu ausgelegt ist, in das Gehäuse (8a; 8a') eingefügt zu werden, wobei der Dehnungsmessstreifen (2a) an einer äußeren Seitenfläche des besagten Hohlzylinders (2b) befestigt wird;
- einen elastisch verformbaren Massivzylinder (2c), welcher dazu ausgelegt ist, in den besagten Hohlzylinder (2b), gegenüber dem er etwas kürzer ist, substantiell spielfrei eingefügt zu werden,
- zwei Stöpsel (2d, 2d'), welche in Kontakt mit den Grundflächen des Massivzylinders (2c) eingefügt sowie dazu ausgelegt sind, in den Hohlzylinder (2b) einzudringen und den Massivzylinder (2c) axial zusammenzudrücken,
wobei der Hohlzylinder (2b) in das Gehäuse (8a, 8a') eingefügt ist mit einem ausreichenden Spiel, um es ihm zu erlauben, sich zu verformen, wobei das besagte Spiel über den gesamten Umfang des Hohlzylinders (2b) einheitlich erhalten bleibt, vorzugsweise dank seiner Flanschanschlüsse, die ihn koaxial zu dem Gehäuse (8a, 8a') halten.

8. Elektromagnetische Bremse gemäß Anspruch 6, wenn jener von einem der Ansprüche 2 - 5 abhängig ist, **dadurch gekennzeichnet, dass** die Sensorbaugruppe (2) umfasst:
- einen elastisch verformbaren Streifen (2e), auf dessen einer Oberfläche der Dehnungsmessstreifen (2a) befestigt ist;
- eine Stützstruktur (2f), welche dazu ausgelegt ist, in das Gehäuse (8a, 8a') eingefügt zu werden, und die eine innere Führung mit einer in Längsrichtung verlaufenden Ausdehnung aufweist und dazu ausgelegt ist, den besagten Streifen (2e) aufzunehmen, derart, dass dessen beiden Enden von der besagten Stützstruktur (2f) nach außen herausragen, sowie derart, dass der Streifen (2e) sich innerhalb der besagten Führung biegen kann;
- einen Vorsprung (2g) in der Mitte der Stützstruktur (2f), welcher dazu ausgelegt ist, den Streifen (2e) gebogen zu halten, so dass jener einen Bogen bildet, vorzugsweise mit einer Konvexität in Richtung zu der Wellenachse (X).

9. Elektromagnetische Bremse gemäß Anspruch 6, wenn jener von einem der Ansprüche 1 - 4 abhängig ist, **dadurch gekennzeichnet, dass** sie nur eine Scheibe (6) und eine Ankerplatte (9) aufweist, sowie dadurch, dass die Sensorbaugruppe (2) umfasst:
- eine elastisch verformbare Platte (2h), auf deren Oberfläche der Dehnungsmessstreifen (2a) befestigt ist, wobei die besagte Platte (2h) eine Hauptausdehnung entlang einer Ebene aufweist, die substantiell rechtwinklig zu der Wellenachse (X) ist, und mit derjenigen Oberfläche der Ankerplatte (9) verbunden ist, welche der Scheibe (6) zugewandt ist, um dadurch frei zu sein, sich zu biegen;
- einen Stift (2i), der an dem Elektromagneten (8) in einstellbarer Weise festgelegt ist und eine Längsausdehnung zu der Ankerplatte (9) hin aufweist, in einer Richtung parallel zu der Wellenachse (X), wobei der besagte Stift (2i) durch ein Durchgangsloch hindurchgreift, das in der Ankerplatte (9) ausgebildet ist in demjenigen freien Bereich der Platte (2h), wo der Dehnungsmessstreifen (2a) befestigt ist, und dazu ausgelegt ist, die Platte (2h) entsprechend einer ersten Deformation zu verbiegen, wenn der Elektromagnet (8) nicht aktiviert ist, und die Platte (2h) entsprechend einer zweiten Deformation zu biegen, die größer als die erste ist, infolge einer Anziehungsbewegung der Ankerplatte (9).

10. Elektromagnetische Bremse gemäß Anspruch 6, wenn jener von einem der Ansprüche 1 - 3 oder 5 abhängig ist, **dadurch gekennzeichnet, dass** sie zwei Scheiben (6) und zwei Ankerplatten (9) aufweist, wobei jede davon zwischen einer zugeordneten Scheibe (6) und dem Elektromagnet (8) platziert ist, sowie dadurch, dass die Sensorbaugruppe (2) umfasst:
- eine elastisch verformbare Platte (2h), auf deren Oberfläche der Dehnungsmessstreifen (2a) befestigt ist, wobei die besagte Platte (2h) eine Hauptausdehnung entlang einer Ebene aufweist, die substantiell rechtwinklig zu der Wellenachse (X) ist, und mit derjenigen Oberfläche der ersten Ankerplatte (9) verbunden ist, welche ihrer zugeordneten Scheibe (6) zugewandt ist, um dadurch frei zu sein, sich zu biegen;
- einen Stift (2i), der an der zweiten Ankerplatte (9) in einstellbarer Weise festgelegt ist und eine Längsausdehnung zu der ersten Ankerplatte (9) hin aufweist, in einer Richtung parallel zu der Wellenachse (X), wobei der besagte Stift (2i) durch miteinander fluchtende Durchgangslöcher hindurchgreift, die in dem Elektromagnet (8) und in der ersten Ankerplatte (9) ausgebildet sind in demjenigen freien Bereich der Platte (2h), wo der Dehnungsmessstreifen (2a) befestigt ist, und dazu ausgelegt ist, die Platte (2h) entsprechend einer ersten Deformation zu verbiegen, wenn der Elektromagnet (8) nicht aktiviert ist, und die Platte (2h) entsprechend einer zweiten Deformation zu biegen, die größer als die erste ist, infolge einer Anziehungsbewegung der ersten und/oder zweiten Ankerplatte (9).

11. Elektromagnetische Bremse gemäß Anspruch 9 oder 10, **dadurch gekennzeichnet, dass** die Platte (2h) an einem freien Umfangsbereich der Ankerplatte (9) festgelegt ist mittels Befestigungen (10), die an einem Ende der Platte (2h) angeordnet ist, welches demjenigen Bereich, wo der Dehnungsmessstreifen (2a) befestigt ist, entgegengesetzt ist.

## Revendications

1. Frein électromagnétique comprenant :
au moins un disque (6) configuré pour être monté, directement ou au moyen d'un moyeu (5), sur un élément rotatif définissant un axe d'arbre (X), ledit au moins un disque (6) ayant des surfaces opposées recouvertes avec un matériau de friction (7),
un électroaimant (8),
au moins une plaque d'induit (9) placée entre le disque (6) et ledit électroaimant (8) et mobile dans une direction définie par ledit axe d'arbre (X),
une pluralité de ressorts de compression agencés et configurés pour pousser ladite au moins une plaque d'induit (9) contre le disque (6), selon ladite direction,
la plaque d'induit (9) étant configurée pour être attirée vers l'électroaimant (8) et maintenue en contact avec ce dernier lorsque l'électroaimant (8) fonctionne,
dans lequel il comprend en outre un ensemble de capteur (2) pouvant mesurer le mouvement le long de la direction d'axe d'arbre (X), dû à l'attraction de l'électroaimant (8), de ladite plaque d'induit (9), ledit ensemble de capteur (2) étant **caractérisé en ce qu'**il comprend :
un élément élastiquement déformable (2b - 2e ; 2h) placé sur le frein pour avoir une déformation initiale lorsque l'électroaimant (8) n'est pas activé et pour subir un changement de déformation suite audit mouvement d'attraction de la plaque d'induit (9), et
des moyens de capteur configurés pour détecter ledit changement de déformation dudit élément élastiquement déformable (2b - 2e ; 2h), ainsi que
des moyens de communication transmettant à l'extérieur du frein, les mesures réalisées par l'ensemble de capteur (2).

2. Frein électromagnétique selon la revendication 1, **caractérisé en ce que** ledit ensemble de capteur (2) est logé dans un boîtier (8a ; 8a') s'étendant à l'intérieur de l'électroaimant (8) dans une direction parallèle audit axe d'arbre (X), à partir d'au moins une première surface de l'électroaimant (8) faisant face à la plaque d'induit (9).

3. Frein électromagnétique selon la revendication 2, **caractérisé en ce que** ledit boîtier (8a ; 8a') est positionné radialement à l'extérieur par rapport à une bobine (8b) de l'électroaimant (8).

4. Frein électromagnétique selon la revendication 2 ou 3, **caractérisé en ce qu'**il comprend uniquement un disque (6) et une plaque d'induit (9) et **en ce que** ledit boîtier (8a) est en communication avec un trou fileté (8c) de plus petit diamètre s'étendant vers la surface opposée de l'électroaimant (8) par rapport à la surface à partir de laquelle le boîtier (8a) s'étend, un dispositif d'ajustement fileté (4) étant logé dans ledit trou fileté (8c) et s'étendant vers le boîtier (8a).

5. Frein électromagnétique selon la revendication 2 ou 3, **caractérisé en ce qu'**il comprend deux disques (6) et deux plaques d'induit (9), chacune d'entre elles étant placée entre un disque (6) respectif et l'électroaimant (8), ledit boîtier (8a') étant un trou débouchant s'étendant entre les deux surfaces de l'électroaimant (8) faisant face aux deux plaques d'induit (9), dont chacune est prévue avec un trou fileté (9a) plus petit du point de vue du diamètre que ledit boîtier (8a') et coaxial par rapport à ce dernier, un dispositif d'ajustement fileté (4) étant logé dans chacun desdits trous filetés (9a) et s'étendant vers le boîtier (8a').

6. Frein électromagnétique selon l'une quelconque des revendications précédentes, **caractérisé en ce que** les moyens de capteur comprennent au moins un extensomètre (2a) rigidement raccordé à l'élément élastique déformable (2b ; 2e ; 2h).

7. Frein électromagnétique selon la revendication 6, lorsqu'elle dépend de l'une des revendications 2 à 5, **caractérisé en ce que** l'ensemble de capteur (2) comprend :
un cylindre creux élastiquement déformable (2b) configuré pour être inséré dans le boîtier (8a ; 8a'), l'extensomètre (2a) étant raccordé à une surface latérale externe dudit cylindre creux (2b) ;
un cylindre solide élastiquement déformable (2c) configuré pour être inséré sensiblement sans jeu à l'intérieur dudit cylindre creux (2b) par rapport auquel, il est légèrement plus court ;
deux bouchons (2d, 2d') insérés en correspondance des bases dudit cylindre solide (2c) et configurés pour pénétrer à l'intérieur du cylindre creux (2b) et pour comprimer axialement le cylindre solide (2c),
dans lequel le cylindre creux (2b) est inséré dans le boîtier (8a, 8a') avec le jeu adéquat pour lui permettre de se déformer, ledit jeu étant maintenu uniforme sur toute la circonférence du cylindre creux (2b) de préférence grâce à ses extrémités à bride qui le maintiennent coaxial par rapport au boîtier (8a, 8a').

8. Frein électromagnétique selon la revendication 6, lorsqu'elle dépend de l'une des revendications 2 à 5, **caractérisé en ce que** l'ensemble de capteur (2) comprend :
une bande élastiquement déformable (2e), à une surface de laquelle est raccordé l'extensomètre (2a) ;
une structure de support (2f) configurée pour être insérée dans le boîtier (8a, 8a') et comprenant un guide interne ayant un développement longitudinal et configuré pour loger ladite bande (2e) de sorte que ses deux extrémités font saillie vers l'extérieur à partir de ladite structure de support (2f) et de sorte que la bande (2e) peut fléchir dans ledit guide ;
une saillie centrale (2g) de la structure de support (2f) configurée pour maintenir la bande (2e) fléchie de sorte qu'elle forme un arc, de préférence avec la convexité vers l'axe d'arbre (X).

9. Frein électromagnétique selon la revendication 6, lorsqu'elle dépend de l'une quelconque des revendications 1 à 4, **caractérisé en ce qu'**elle comprend uniquement un disque (6) et une plaque d'induit (9), et **en ce que** l'ensemble de capteur (2) comprend :
une plaque élastiquement déformable (2h), à une surface de laquelle est raccordé l'extensomètre (2a), ladite plaque (2h) ayant un développement principal le long d'un plan sensiblement perpendiculaire à l'axe d'arbre (X) et étant reliée à la surface de la plaque d'induit (9) faisant face au disque (6) afin d'être libre de fléchir ;
un goujon de retenue (2i) contraint sur l'électroaimant (8) d'une manière ajustable et ayant un développement longitudinal vers la plaque d'induit (9) dans une direction parallèle à celle de l'axe d'arbre (X), ledit goujon de retenue (2i) passant par un trou débouchant formé dans la plaque d'induit (9) au niveau de la partie libre de la plaque (2h) où l'extensomètre (2a) est raccordé, et étant configuré pour fléchir la plaque (2h) selon une première déformation, lorsque l'électroaimant (8) n'est pas activé, et pour fléchir la plaque (2h) selon une seconde déformation, supérieure à la première, en raison du mouvement d'attraction de la plaque d'induit (9).

10. Frein électromagnétique selon la revendication 6, lorsqu'elle dépend de l'une quelconque des revendications 1 à 3 ou 5, **caractérisé en ce qu'**il comprend deux disques (6) et deux plaques d'induit (9), chacune d'entre elles étant placée entre un disque (6) respectif et l'électroaimant (8), et **en ce que** l'ensemble de capteur (2) comprend :
une plaque élastiquement déformable (2h) à une surface de laquelle est raccordé l'extensomètre (2a), ladite plaque (2h) ayant un développement principal le long d'un plan sensiblement perpendiculaire à l'axe d'arbre (X) et étant reliée à la surface d'une première plaque d'induit (9) faisant face à son disque (6) respectif afin d'être libre de fléchir ;
un goujon de retenue (2i) contraint sur la seconde plaque d'induit (9) d'une manière ajustable et ayant un développement longitudinal vers ladite première plaque d'induit (9) dans une direction parallèle à celle de l'axe d'arbre (X), ledit goujon de retenue (2i) passant par des trous débouchants alignés, formés dans l'électroaimant (8) et dans la première plaque d'induit (9) dans la partie libre de la plaque (2h) où l'extensomètre (2a) est raccordé, et étant configuré pour fléchir la plaque (2h) selon une première déformation, lorsque l'électroaimant (8) n'est pas activé, et pour fléchir la plaque (2h) selon une seconde déformation, supérieure à la première, en raison du mouvement d'attraction de la première et/ou de la seconde plaque d'induit (9).

11. Frein électromagnétique selon la revendication 9 ou 10, **caractérisé en ce que** la plaque (2h) est fixée sur une partie périphérique libre de la plaque d'induit (9) au moyen de fixations (10) placées au niveau d'une extrémité de la plaque (2h) opposée à la partie où l'extensomètre (2a) est raccordé.
